(19) **Europäisches Patentamt European Patent Office Office européen des brevets**

(11) **EP 4 684 907 A1**

(12) **EUROPEAN PATENT APPLICATION**
published in accordance with Art. 153(4) EPC

(43) Date of publication:
28.01.2026  Bulletin 2026/05

(51) International Patent Classification (IPC):
**B23K 37/04** (2006.01)

(21) Application number: 23931867.8

(22) Date of filing: 26.12.2023

(52) Cooperative Patent Classification (CPC):
Y02E 60/10

(86) International application number:
**PCT/CN2023/141914**

(87) International publication number:
**WO 2024/207822 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  07.04.2023  CN 202310413045

(71) Applicant: **Sunwoda Mobility Energy Technology Co., Ltd.**
**Shenzhen, Guangdong 518107 (CN)**

(72) Inventor: **LIANG, Beibei**
**Shenzhen, Guangdong 518107 (CN)**

(74) Representative: **Boult Wade Tennant LLP**
**Salisbury Square House**
**8 Salisbury Square**
**London EC4Y 8AP (GB)**

(54) **WELDING POSITIONING APPARATUS AND WELDING DEVICE**

(57)  A welding positioning apparatus includes a main board (10) and a pressing block (20) connected to the main board; the welding positioning apparatus is provided with a guide hole (30) penetrating through the main board and the pressing block in a first direction, and a protective sheet (40) is embedded in the guide hole and is movable in the first direction x in the guide hole; an area of an orthographic projection (701) of a tab (70) on a plane perpendicular to the first direction x is $S_1$; a surface of the main board away from the pressing block is a first surface (101), the guide hole penetrates through the first surface, and an area of the guide hole on the first surface is $S_2$ and satisfies: $0.14 \leq S_2/S_1 \leq 0.65$. By providing the guide hole, the positioning apparatus achieve the guiding and positioning effect on the protective sheet, avoiding an offset of the protective sheet. Meanwhile, a relationship between the area of the guide hole and the projected area of the tab is defined, ensuring that the protective sheet completely covers a welding region of the tab, improving the welding yield of the protective sheet and the tab, and thereby improving the overall safety performance of the battery. A welding device is further disclosed.

EP 4 684 907 A1

FIG. 9

**Description**

This application claims priority to Chinese Patent Application No. 202310413045.0, filed to the China National Intellectual Property Administration on April 7, 2023, entitled "Welding Positioning Apparatus and Welding Device", which is incorporated herein by reference in its entirety.

**FIELD**

Embodiments of the present application relate to but are not limited to the technical field of batteries, and specifically relate to a welding positioning apparatus and welding device.

**BACKGROUND**

During the manufacturing process of power batteries, it is necessary to weld a connecting sheet, tabs of opposite-side cells, and a protective sheet together to form a connection. However, since a position of the protective sheet is easy to offset, the protective sheet cannot accurately cover welding positions of the tabs, thereby causing poor welding yield and seriously affecting the service performance of the battery.

**TECHNICAL PROBLEM**

The present application provides a welding positioning apparatus and welding device to solve the problem that a protective sheet is easy to offset.

**TECHNICAL SOLUTION**

The following is a summary of the subject matter described in detail herein. This summary is not intended to limit the protection scope of the claims.

In a first aspect, a welding positioning apparatus for welding a protective sheet to an electrode assembly including a tab, where the welding positioning apparatus includes:

a main board and a pressing block connected to the main board;
the welding positioning apparatus is provided with a guide hole penetrating through the main board and the pressing block in a first direction, and the protective sheet is embedded in the guide hole and is movable in the first direction x in the guide hole;
an area of an orthographic projection of the tab on a plane perpendicular to the first direction x is $S_1$ mm$^2$; a surface of the main board away from the pressing block is a first surface, the guide hole penetrates through the first surface, and an area of the guide hole on the first surface is $S_2$ mm$^2$ and satisfies: $0.14 \leq S_2/S_1 \leq 0.65$.

Optionally, the orthographic projection has a side edge, a bottom edge, and a top edge, the side edge is respectively connected to the bottom edge and the top edge; a maximum distance between the top edge and the bottom edge in a second direction y is B mm, a maximum dimension of the bottom edge in a third direction z is A mm, and an angle between the side edge and the bottom edge is $\beta°$; a maximum dimension of the tab in the first direction x is h mm; and the area $S_2$ mm$^2$ of the guide hole on the first surface further satisfies: $S_2 = ((B - 2 - (h^2 + 4)^{0.5}) \times (A - 2B\cot\beta))$.

Optionally, the electrode assembly includes at least two groups, the electrode assemblies are arranged at an interval in the second direction y, so that the tabs are symmetrically arranged along a central axis of the main board in the third direction z; and a maximum width of the welding positioning apparatus in the second direction y is $W_1$ mm, and a maximum distance of the electrode assemblies arranged at an interval in the second direction y is $W_2$ mm and satisfies: $0.6 \leq W_1/W_2 \leq 1$.

Optionally, the maximum width $W_1$ mm further satisfies: $W_1 = 2B - 2((4 + h^2)^{0.5}) + 2$, and $2B \leq W_1 \leq 2h$.

Optionally, the welding positioning apparatus further satisfies: the welding positioning apparatus satisfies at least one of the following:

a)

$$100 \leq S_2 \leq 700;$$

b)

$$700 \leq S_1 \leq 1650;$$

c)

$$17 \leq W_1 \leq 48;$$

d)

$$10 \leq W_2 \leq 48;$$

the tab satisfies at least one of the following:

e)

$$28 \leq A \leq 51;$$

f)

$$18 \leq B \leq 32;$$

g)

$$80 \leq \beta \leq 90;$$

h)

$$10 \leq h \leq 24.$$

Optionally, a surface of the pressing block away from the main board is a second surface, the pressing block is provided with a positioning hole, the positioning hole communicates with the guide hole and penetrates through the second surface, an area of the positioning hole on the second surface is $S_3$ mm$^2$ and satisfies: $0.6 \leq S_2/S_3 \leq 0.85$;
a maximum dimension of the positioning hole in the first direction x is H mm, and a thickness of the protective sheet is D mm and satisfies: $D \leq H$.

Optionally, the welding positioning apparatus satisfies at least one of the following:

i)

$$140 \leq S_3 \leq 830;$$

j)

$$1 \leq H \leq 2;$$

the protective sheet satisfies: $0.1 \leq D \leq 1$.

Optionally, the guide hole has a first side wall in the first direction x, and the positioning hole has a second side wall in the first direction x; the first side wall is provided with a round corner transition section, and the first side wall is connected to the second side wall through the round corner transition section.

Optionally, the welding positioning apparatus further includes:
a protrusion located on the first surface and connected to the main board.

According to a second aspect, the present application further provides a welding device including the welding positioning apparatus.

**BENEFICIAL EFFECT**

Compared with the prior art, the welding positioning apparatus according to the present application is used for welding the protective sheet on the electrode assembly including a tab. The welding positioning apparatus includes the main board and the pressing block connected to the main board. The welding positioning apparatus is provided with the guide hole penetrating through the main board and the pressing block in the first direction x, and the protective sheet is embedded in the guide hole and is movable in the first direction x in the guide hole. The area of the orthographic projection of the tab on the plane perpendicular to the first direction x is $S_1$ mm$^2$. The surface of the main board away from the pressing block is the first surface, the guide hole penetrates through the first surface, and the area of the guide hole on the first surface is $S_2$ mm$^2$ and satisfies: $0.14 \leq S_2/S_1 \leq 0.65$. The present application achieves a guiding and positioning effect on the protective sheet by providing the guide hole, thereby avoiding the offset of the protective sheet. Meanwhile, a relationship between the area of the guide hole and the projected area of the tab is further defined, which can ensure that the protective sheet completely covers a welding region of the tab, avoid a poor welding phenomenon caused by the protective sheet, improve the welding yield of the protective sheet and the tab, and thereby improve the overall safety performance of the battery.

It may be understood that the welding device provided in the present application has all technical features and beneficial effects of the aforementioned welding positioning apparatus, and details are not described herein again.

## BRIEF DESCRIPTION OF DRAWINGS

FIG. 1 shows a schematic structural diagram of a welding positioning apparatus according to an embodiment of the present application;

FIG. 2 shows a schematic structural diagram of a bottom surface of a welding positioning apparatus according to an embodiment of the present application;

FIG. 3 shows a schematic structural diagram of another welding positioning apparatus according to an embodiment of the present application;

FIG. 4 shows a top view of FIG. 1;

FIG. 5 shows a schematic cross-sectional view taken along line A-A in FIG. 4;

FIG. 6 shows a schematic cross-sectional view of the welding positioning apparatus shown in FIG. 3;

FIG. 7 shows a schematic diagram of a use state of a welding positioning apparatus according to an embodiment of the present application;

FIG. 8 shows a schematic diagram of another use state of a welding positioning apparatus according to an embodiment of the present application;

FIG. 9 shows a top view of FIG. 8;

FIG. 10 shows a partial enlarged view of part B in FIG. 9;

FIG. 11 shows a schematic structural diagram of a protective sheet before shaping according to an embodiment of the present application;

FIG. 12 shows a schematic structural diagram of a protective sheet after shaping according to an embodiment of the present application;

FIG. 13 shows a partial enlarged view of part C in FIG. 5;

FIG. 14 shows a partial enlarged view of part D in FIG. 6;

Reference numerals, 10-main board, 20-pressing block, 30-guide hole, 40-protective sheet, 50-electrode assembly, 60-jelly roll body, 70-tab, 80-positioning hole, 90-protrusion, 100-connecting sheet, 101-first surface, 201-second surface, 302-first side wall, 401-protruding part, 402-groove, 701-orthographic projection, 7011-side edge, 7012-bottom edge, 7013-top edge, 802-second side wall, 3021-round corner transition section.

## DETAILED DESCRIPTION

The technical solutions in embodiments of the present application will be clearly and completely described below with reference to the accompanying drawings in embodiments of the present application. The described embodiments are merely part of embodiments of the present application, not all of them. Based on the embodiments of the present application, all other embodiments obtained by those skilled in the art without making creative efforts shall fall within the protection scope of the present application.

The following disclosure provides many different implementations or examples for implementing different structures of the present application. In order to simplify the disclosure of the present application, the components and configurations of specific examples are described below. Of course, they are merely examples and are not intended to limit the present application.

During the manufacturing process of the power cell, it is necessary to weld tabs of the opposite-side cells, an

**EP 4 684 907 A1**

adapter sheet, and a protective sheet together to form a connection. At present, the conventional welding positioning clamp fails to achieve a good effect on the positioning of the protective sheet, the position of the protective sheet is easy to offset, and abnormalities such as poor welding or poor bending of the tab during cell assembly are caused.

Therefore, it is necessary to provide a welding positioning apparatus to solve the above problems.

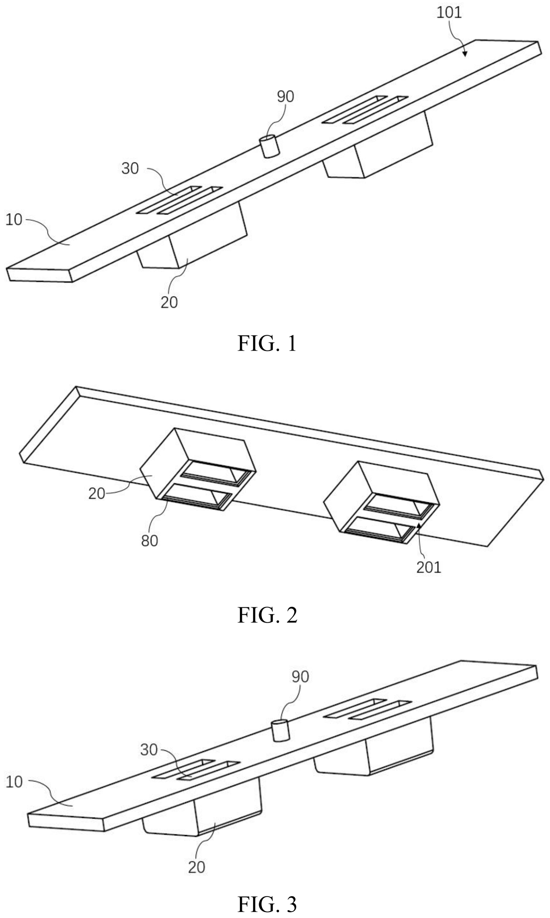

Referring to FIGS. 1, 2, 9, and 10, a welding positioning apparatus is provided for welding a protective sheet 40 to an electrode assembly 50. The electrode assembly 50 includes a jelly roll body 60 and a tab 70 disposed on the jelly roll body 60, and the tab 70 is connected to the jelly roll body 60. The welding positioning apparatus includes a main board 10 and a pressing block 20 connected to the main board 10. The welding positioning apparatus is provided with a guide hole 30 penetrating through the main board 10 and the pressing block 20 sequentially in a first direction x. The protective sheet 40 is embedded in the guide hole 30 and is movable in the first direction x in the guide hole 30. An area of an orthographic projection 701 of the tab 70 on a plane perpendicular to the first direction x is $S_1$ mm$^2$. A surface of the main board 10 away from the pressing block 20 is a first surface 101, the guide hole 30 penetrates through the first surface 101, and an area of the guide hole 30 on the first surface 101 is $S_2$ mm$^2$ and satisfies: $0.14 \leq S_2/S_1 \leq 0.65$.

Optionally, by providing the guide hole 30, the protective sheet 40 is movable in the guide hole 30, so as to achieve a guiding and positioning effect on the protective sheet 40, avoid an offset that tends to occur when the protective sheet 40 is placed directly. Meanwhile, it further defines a relationship between the area of the guide hole 30 on the first surface 101 and a projected area of the tab 70, which ensures that the protective sheet 40 can completely cover a corresponding region of the tab 70 that needs to be welded after being guided by the guide hole 30, thereby avoiding a poor welding phenomenon caused by incomplete coverage of the protective sheet 40, improving the welding yield of the protective sheet 40 and the tab 70, and ensuring that the tab 70 can remain within the protective range of the protective sheet 40 after being bent under the aforementioned area ratio requirement, thereby improving the overall safety performance of the battery.

Optionally, the tab 70 is led out from the jelly roll body 60, that is, the tab 70 is led out from a foil of the jelly roll body 60. A specific measurement method of the area $S_1$ of the orthographic projection 701 of the tab 70 on the plane perpendicular to the first direction x is as follows: take the electrode assembly 50, complete a gathering and shaping operation on the tab 70 through pressing down the pressing block 20, and take the plane perpendicular to the first direction x as a projection plane, where the perpendicular herein refers to perfectly perpendicular or almost perfectly perpendicular, for example, within a 5° range of perfect perpendicularity is considered perpendicular; project the projection of the tab 70 in the first direction x onto the projection plane to obtain the orthographic projection 701, then draw a shape of the obtained orthographic projection 701, and calculate an area according to the obtained shape to obtain the $S_1$. The specific measurement method of the area $S_2$ of the guide hole 30 on the first surface 101 is as follows: take the welding positioning apparatus, and directly calculate an area according to a shape of the guide hole 30 on the first surface 101, and thus obtain the $S_2$.

It should be understood that the shape of the orthographic projection 701 includes, but is not limited to, any one of a trapezoid, a rectangle, a square, a parallelogram, a rhombus, a triangle, an irregular polygon, a sector, and the like. The shape of the guide hole 30 on the first surface 101 includes, but is not limited to, any one of a rectangle, a circle, an ellipse, a square, a trapezoid, and the like, and the shape of the guide hole 30 on the first surface 101 depends on the shape of the adopted protective sheet 40, that is, it should match the shape of the protective sheet 40. An optional configuration is that the shape of the orthographic projection 701 is a trapezoid, and the shape of the guide hole 30 on the first surface 101 is a rectangle.

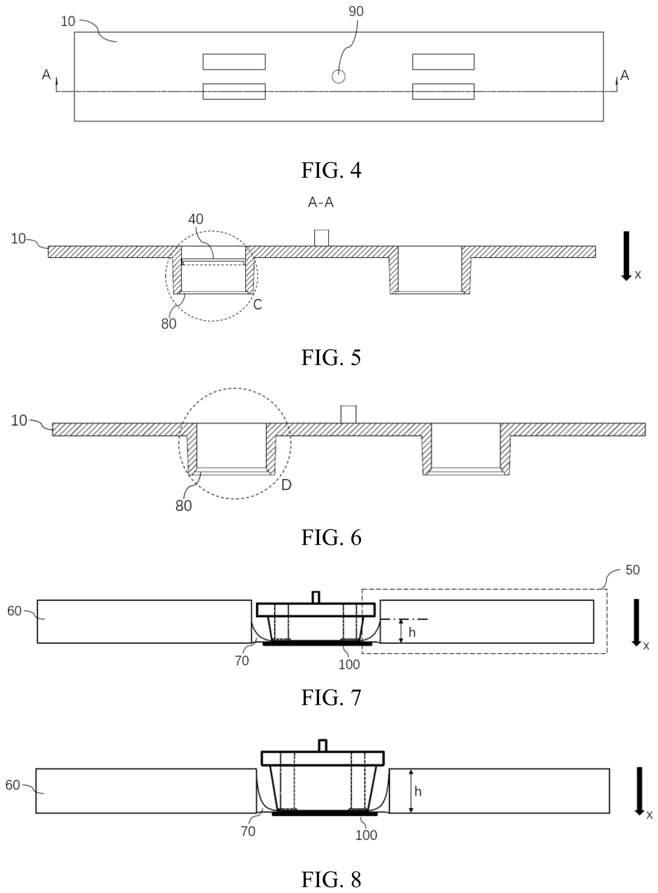

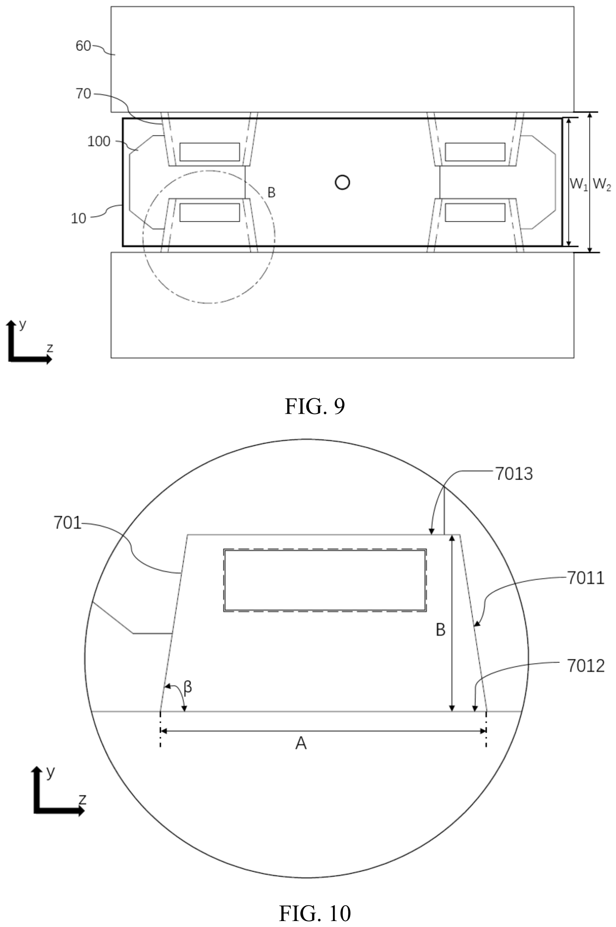

Optionally, in order to further determine an area of a second orthographic projection 301 of the guide hole 30, FIG. 10 is further referred to. The orthographic projection 701 has a side edge 7011, a bottom edge 7012, and a top edge 7013, the side edge 7011 is respectively connected to the bottom edge 7012 and the top edge 7013. A maximum distance between the top edge 7013 and the bottom edge 7012 in a second direction y is B mm, a maximum dimension of the bottom edge 7012 in a third direction z is A mm, and an angle between the side edge 7011 and the bottom edge 7012 is $\beta°$. Referring to FIGS. 7 and 8, a maximum distance of the tab 70 in the first direction x is h mm. The area $S_2$ mm$^2$ of the guide hole 30 on the first surface 101 further satisfies: $S_2 = ((A-2-(h^2+4)^{0.5}) \times (B-2A\tan\beta))/(A \times B - A^{2\tan\beta})$. It should be understood that, the welding positioning apparatus and the tab are matched with each other, the dimensions of the tab 70 determines the projected area of the guide hole 30, and the guide hole 30 further determines the dimensions of the protective sheet 40, and only when the dimensions match each other, the protective sheet 40 has a protective effect on the tab 70.

Optionally, the first direction x, the second direction y, and the third direction z intersect with each other. For example, the first direction x, the second direction y, and the third direction z are perpendicular to each other. The perpendicular herein refers to perfectly perpendicular or almost perfectly perpendicular. For example, within a 5° range of perfect perpendicularity is considered perpendicular.

Further, referring to FIG. 2, the shape of the orthographic projection 701 is a trapezoid, and each of the side edge 7011, the bottom edge 7012, and the top edge 7013 is straight edge. After a corresponding projected shape is drawn, the maximum distance between the top edge 7013 and the bottom edge 7012 in the second direction y may be measured by a caliper, that is, a height of the trapezoid is measured to obtain the B. Meanwhile, the maximum dimension of the bottom edge 7012 in the third direction z is measured by the caliper, so as to obtain the A. The angle between the side edge 7011

and the bottom edge 7012 is measured by a protractor, so as to obtain the $\beta$. The maximum dimension h of the tab 70 in the first direction x may be further understood as: record a position where the tab 70 is led out from the jelly roll body 60, and measure a maximum distance between this position and a large surface of the jelly roll body 60 in the first direction x to obtain the h. Optionally, the tab may be classified into a full tab and a half tab according to its lead-out position, FIG. 8 shows a configuration of the full tab, where h refers to a thickness of the jelly roll body 60 in the first direction x. FIG. 7 shows a configuration of the half tab, where the h refers to a half of the thickness of the jelly roll body 60 in the first direction x. Certainly, the measurement of the h is based on the actual lead-out position of the tab 70 from the jelly roll body 60. The large surface of the jelly roll body 60 specifically refers to a surface with the largest area on the jelly roll body 60. Referring to FIG. 8 or FIG. 7, the large surface of the jelly roll body 60 specifically refers to a bottom surface or a top surface of the jelly roll body 60.

Optionally, the welding positioning apparatus further satisfies: $100 \le S_2 \le 700$; and $700 \le S_1 \le 1650$. For example, the $S_2$ may be any one of 100, 240, 360, 480, 640, or 700, or a value within a range between any two of these values. $S_1$ may be any one of 700, 810, 990, 1260, 1440, or 1650, or a value within a range between any two of these values. By respectively defining the area of the orthographic projection 701 and the area of the guide hole 30 on the first surface 101, it can ensure that the protective sheet 40 covers the welding region of the tab 70.

Optionally, referring to FIG. 9, the electrode assembly 50 includes two groups, and the electrode assemblies 50 are arranged at an interval in the second direction y, so that the tabs 70 are symmetrically arranged along a central axis of the main board 10 in the third direction z. Since the electrode assemblies 50 are disposed opposite to each other, in order to prevent the welding positioning apparatus from being interfered with by the electrode assemblies 50 when the welding positioning apparatus is placed on the tab 70, a width of the welding positioning apparatus needs to be further defined. Specifically, a maximum width of the welding positioning apparatus in the second direction y is $W_1$ mm, and a maximum distance of the electrode assemblies 50 arranged at an interval in the second direction y is $W_2$ mm and satisfies: $0.6 \le W_1/W_2 \le 1$.

It should be understood that the maximum width $W_1$ refers to the maximum dimension of the welding positioning apparatus in the second direction y when the welding positioning apparatus is arranged as requirements. During specific measurement, the measurement of the maximum width $W_1$ can be performed by directly clamping the welding positioning apparatus with a vernier caliper in the second direction y. The maximum distance $W_2$ can be directly obtained by measuring a distance between the oppositely arranged electrode assemblies 50 through a caliper.

Optionally, since the welding positioning apparatus and the tab 70 are matched with each other, the maximum width $W_1$ of the welding positioning apparatus in the second direction y further satisfies: $W_1 = 2B - 2((4 + h^2)^{0.5}) + 2$, and $2B \le W_1 \le 2h$. When the above relationship is satisfied, it can ensure that the welding positioning apparatus is not interfered with by the electrode assemblies 50 when pressing the tab 70.

Further, the welding positioning apparatus further satisfies: $17 \le W_1 \le 48$; and $10 \le W_2 \le 48$. For example, the $W_1$ may be any one of 17, 25, 32, 41, or 48, or a value within a range between any two of these values. The $W_2$ may be any one of 10, 17, 25, 32, 41, or 48, or a value within a range between any two of these values.

Optionally, since the area of the guide hole 30 and the width of the welding positioning apparatus are affected by the dimensions of the tab 70, the tab 70 further satisfies: $28 \le A \le 51$. For example, the A may be any one of 28, 29, 30, 31, 32, 33, 34, 35, 36, 37, 38, 39, 40, 41, 42, 43, 44, 45, 46, 47, 48, 49, 50, or 51, or a value within a range between any two of these values.

Optionally, the tab 70 further satisfies: $18 \le B \le 32$. For example, the B may be any one of 18, 19, 20, 21, 22, 23, 24, 25, 26, 27, 28, 29, 30, 31, or 32, or a value within a range between any two of these values.

Optionally, the tab 70 further satisfies: $80° \le \beta \le 90°$. For example, the $\beta$ may be any one of 80°, 81°, 82°, 83°, 84°, 85°, 86°, 87°, 88°, 89°, or 90°, or a value within a range between any two of these values.

Optionally, the tab 70 further satisfies: $10 \le h \le 24$. For example, the h may be any one of 10, 12, 15, 19, 22, or 24, or a value within a range between any two of these values.

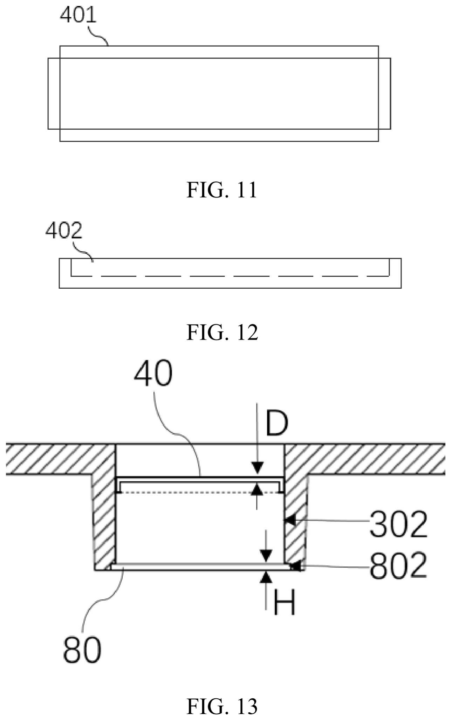

Optionally, in order to prevent the corners of the protective sheet 40 from cutting a foil of the tab 70, the protective sheet 40 needs to be shaped before passing through the guide hole 30. Referring to FIGS. 11 and 12, the protective sheet 40 before shaping has a protruding part 401, and the shaping process specifically refers to folding the protruding part 401 in the protective sheet shown in FIG. 11 towards a center of the protective sheet 40 to form the protective sheet 40 shown in FIG. 12. The protective sheet shown in FIG. 12 has a groove 402, and subsequently, it is necessary to make the surface where the groove 402 is located faces the tab 70 and moves the protective sheet 40 in the guide hole 30. However, when the protective sheet 40 is moved onto the tab 70, the shaped protective sheet 40 needs to unfold the folded protruding part 401 to complete subsequent welding work. In order to facilitate the unfolding of the protective sheet 40, referring to FIGS. 2, 4, 5 and 10, a surface of the pressing block 20 away from the main board 10 is a second surface 201, the pressing block 20 is provided with a positioning hole 80, the positioning hole 80 communicates with the guide hole 30 and penetrates through the second surface 201, and an area of the positioning hole 80 on the second surface 201 is $S_3$ mm$^2$ and satisfies: $0.6 \le S_2/S_3 \le 0.85$.

It should be understood that, referring to FIG. 10, a solid-line rectangular region represents the area $S_2$ of the

guide hole 30 on the first surface 101, and a dashed-line rectangular region represents the area $S_3$ of the positioning hole 80 on the second surface 201. The positioning hole 80 is used for unfolding the shaped protective sheet 40, and therefore the area $S_3$ of the positioning hole 80 on the second surface 201 needs to be slightly larger than the area $S_2$ of the guide hole 30 on the first surface 101, and further optionally, $0.7 \leq S_2 / S_3 \leq 0.8$.

Optionally, further referring to FIGS. 5 and 13, the positioning hole 80 has a maximum dimension H mm in the first direction x, and a thickness of the protective sheet 40 is D mm and satisfies: $D \leq H$. It should be understood that the thickness of the protective sheet 40 specifically refers to the thickness of the protective sheet 40 before shaping, and only when $D \leq H$ is satisfied, it can be ensured that the shaped protective sheet 40 can be completely located within the positioning hole 80 when the shaped protective sheet 40 is unfolded, thereby avoiding the situation that the protective sheet 40 cannot be unfolded due to too low a height of the positioning hole 80 in the first direction x.

Further, referring to FIG. 10, the specific measurement method of the area $S_3$ of the positioning hole 80 on the second surface 201 is as follows: take the welding positioning apparatus, and calculate an area according to a shape of the positioning hole 80 on the second surface 201 to obtain the $S_3$. The maximum dimension H of the positioning hole 80 in the first direction x may be directly measured by a caliper, and the thickness D of the protective sheet may be directly measured by the caliper.

Optionally, the welding positioning apparatus satisfies: $140 \leq S_3 \leq 830$. For example, the $S_3$ may be any one of 140, 280, 440, 560, 680, or 830, or a value within a range between any two of these values.

Optionally, the welding positioning apparatus satisfies: $1 \leq H \leq 2$. For example, the H may be any one of 1, 1.2, 1.3, 1.5, 1.8, or 2, or a value within a range between any two of these values.

Optionally, the protective sheet 40 satisfies: $0.1 \leq D \leq 1$. For example, the D may be any one of 0.1, 0.2, 0.3, 0.5, 0.8, or 1, or a value within a range between any two of these values.

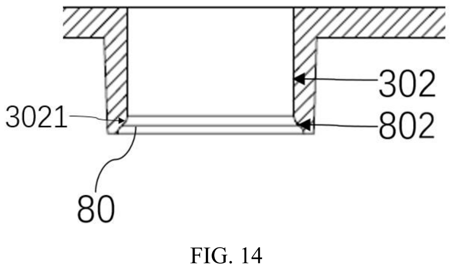

Optionally, referring to FIGS. 3, 6 and 14, in a structure of another welding positioning apparatus, the guide hole 30 has a first side wall 302 in the first direction x, the positioning hole 80 has a second side wall 802 in the first direction x, the first side wall 302 is provided with a round corner transition section 3021, and the first side wall 302 is connected to the second side wall 802 through the round corner transition section 3021. That is, the first side wall 302 and the second side wall 802 are connected through an arc transition. It should be understood that, by providing the round corner transition section 3021, a joint of the first side wall 302 and the second side wall 802 has an arc-shaped surface, which facilitates the shaped protective sheet 40 to be unfolded to both sides and completely located in the positioning hole 80 when moving downwards and passing through the positioning hole 80, and the problem that the protruding part 401 of the shaped protective sheet 40 fails to unfold under external force is avoided.

Further, the round corner transition section 3021 may be understood as an arc surface disposed at the joint of the first side wall 302 and the second side wall 802, and a radius of the arc surface can range from 0.5 mm to 1mm. In addition, the second side wall 802 itself may be arc-shaped to further facilitate the unfolding of the protective sheet 40.

Optionally, referring to FIG. 1, the welding positioning apparatus further includes a protrusion 90 located on the first surface 101, and the protrusion 90 is connected to the main board 10. It may be understood that the protrusion 90 may be used as a handheld part to facilitate grasping of the welding positioning apparatus.

Optionally, a specific usage process of the welding positioning apparatus of the present application is as follows:

1) After the connecting sheet 100 and the two oppositely disposed electrode assemblies 50 are respectively positioned, hold the protrusion 90 to place the welding positioning apparatus in the middle of the oppositely disposed electrode assemblies 50, where the welding positioning apparatus is provided with two pressing blocks 20, which respectively correspond to positive and negative tabs of the electrode assemblies 50;

2) While the welding positioning apparatus is placed and positioned, the tabs of the electrode assemblies 50 complete the gathering and shaping operation through the bottom surface of the pressed-down pressing blocks 20. Parts of the pressing blocks 20 in contact with the tabs 70 can be provided with rounded corners, radii of the rounded corners can be set to 0.1 - 2mm, and the rounded corners can prevent the tabs from being damaged;

3) Take two protective sheets 40, shape the protective sheets 40 according to FIGS. 11 and 12, make the grooves 402 of the shaped protective sheets 40 face the tabs 70 and be placed in the guide holes 30. The dimensions of the shaped protective sheets 40 are consistent with the dimensions of the guide holes 30, ensuring that the protective sheets 40 without significant positional offset during their falling process;

4) After the position of the protective sheets 40 are positioned, weld the protective sheets 40, the tabs 70, and the connecting sheet 100 through a welding head and a welding seat. At this point, the protective sheets 40 are moved downwards under the action of ultrasonic vibration, and in the positioning holes 80, the circumferentially shaped protruding parts 401 are unfolded. The positioning holes 80 further limits the protective sheets 40, the dimensions of the unfolded protective sheets are consistent with the dimensions of the positioning holes 80, ensuring that the protective sheets 40 do not have significant positional offset. The dimensions of the protective sheets 40 can be set according to the performance requirement of the electrode assemblies 50, in a width direction, a range from 5 mm to 10 mm can be selected, and in a length direction, a range from 15 mm to 24 mm can be selected;

5) After the welding is completed, remove the welding positioning apparatus, then take out the electrode assemblies 50, and proceed to next operation.

The welding positioning apparatus according to the present application has both shaping and protection functions: after the connecting sheets 100 and the electrode assemblies 50 are positioned, it can shape the tabs 70 while positioning, ensuring the tabs 70 are formed in an orderly manner; by providing the guide holes 30, it can effectively guide and position the protective sheet 40 during ultrasonic welding, preventing the protective sheet 40 from offsetting, thereby improving the welding yield and the consistency of cell welding.

Optionally, the present disclosure further provides a welding device including the welding positioning apparatus provided in embodiments of the present disclosure.

Examples 1-8 are provided respectively, in which the welding positioning apparatus of the present disclosure is used to weld the protective sheets, the tabs and the connecting sheet. Meanwhile, Comparative Examples 1-3 are provided. Comparative Example 1 does not adopt the welding positioning apparatus of the present application, and the protective sheets, tabs and the connecting sheet are directly welded. The welding positioning apparatus of Comparative Examples 2 and 3 do not satisfy the range of $0.14 \leq S_2/S_1 \leq 0.65$. The specific structural parameters and the performance test results after welding are shown in Table 1.

The method for testing the welding yield is as follows: after welding, take 2000 samples from each of the examples and comparative examples respectively, classify them into defective products and good products by observing the appearances of the welded joints. The characteristics of the defective products include cold solder joint, over-soldering, and weld crack; the characteristics of the good products include flat solder marks, no cracks, and qualified residual welding tensile force. Count a number of defective products, calculate the proportion of good products, and obtain the welding yield data.

Table 1

| | $S_2$ mm² | $S_1$ mm² | A mm | B mm | h mm | β° | $W_1$ mm | $W_2$ mm | $S_3$ mm² | H mm | D mm | Welding Yield |
|---|---|---|---|---|---|---|---|---|---|---|---|---|
| Example 1 | 259.1 | 860.9 | 51 | 18 | 10 | 80 | 17.6 | 12.5 | 363.9 | 1.3 | 0.2 | 99.67% |
| Example 2 | 234.9 | 1451.4 | 51 | 32 | 24 | 80 | 17.8 | 12.5 | 330.3 | 1.3 | 0.2 | 99.59% |
| Example 3 | 301.7 | 1632 | 51 | 32 | 24 | 90 | 17.8 | 12.5 | 419.6 | 1.3 | 0.2 | 99.78% |
| Example 4 | 165.7 | 896 | 28 | 32 | 24 | 90 | 17.8 | 12.5 | 237.5 | 1.5 | 0.3 | 99.69% |
| Example 5 | 554.4 | 896 | 28 | 32 | 10 | 90 | 45.6 | 32.5 | 654.1 | 1.5 | 0.3 | 99.70% |
| Example 6 | 331 | 715.4 | 28 | 32 | 10 | 80 | 45.6 | 32.5 | 408 | 1.5 | 0.3 | 99.80% |
| Example 7 | 183.4 | 889.8 | 40 | 25 | 17 | 80 | 17.8 | 12.5 | 261.6 | 1.3 | 0.2 | 99.85% |
| Example 8 | 209.6 | 945.3 | 40 | 25 | 17 | 85 | 17.8 | 12.5 | 296.6 | 1.3 | 0.2 | 99.79% |
| Comparative Example 1 | / | 985 | 51 | 20 | 20 | 85 | / | 37 | / | / | 0.2 | 88.79% |
| Comparative Example 2 | 115 | 985 | 51 | 20 | 20 | 85 | 40 | 37 | 560 | 0 | 0.2 | 85.78% |
| Comparative Example 3 | 900 | 985 | 51 | 20 | 20 | 85 | 40 | 37 | 560 | 0 | 0.2 | 83.29% |

It can be seen from Table 1 that the welding positioning apparatus provided by examples 1-8 all satisfy the range of $0.14 \leq S_2/S_1 \leq 0.65$, so the welding yield of the examples 1-8 is higher. In the comparative example 1, since the welding positioning apparatus is not adopted, the positions of the protective sheets cannot be guided and positioned, so that the welding yield is lower than that of examples 1-8. In the comparative examples 2 and 3, since none of them satisfy the range of $0.14 \leq S_2/S_1 \leq 0.65$, the protective sheets cannot accurately cover the welding regions of the electrode tabs, and the welding yield is lower than that of the examples 1-8.

The welding positioning apparatus and the welding device provided by the present disclosure are described in detail above, and the principles and implementations of the present disclosure are described in detail herein, and the description of the above embodiments is only used to help understand the method and the core idea of the present disclosure; meanwhile, for those skilled in the art, according to the idea of the present disclosure, changes may be made in specific implementations and application ranges, and in conclusion, the present specification should not be construed as a limitation on this application.

**Claims**

1. A welding positioning apparatus for welding a protective sheet (40) on an electrode assembly (50) comprising a tab (70), wherein the welding positioning apparatus comprises:

    a main board (10) and a pressing block (20) connected to the main board (10);
    wherein the welding positioning apparatus is provided with a guide hole (30) penetrating through the main board (10) and the pressing block (20) in a first direction (x), and the protective sheet (40) is embedded in the guide hole (30) and is movable in the first direction (x) in the guide hole (30);
    an area of an orthographic projection (701) of the tab (70) on a plane perpendicular to the first direction (x) is $S_1$ mm$^2$; a surface of the main board (10) away from the pressing block (20) is a first surface (101), the guide hole (30) penetrates through the first surface (101), and an area of the guide hole (30) on the first surface (101) is $S_2$ mm$^2$ and satisfies: $0.14 \leq S_2/S_1 \leq 0.65$.

2. The welding positioning apparatus of claim 1, wherein the orthographic projection (701) has a side edge (7011), a bottom edge (7012), and a top edge (7013), the side edge (7011) is respectively connected to the bottom edge (7012) and the top edge (7013); a maximum distance between the top edge (7013) and the bottom edge (7012) in a second direction (y) is B mm, a maximum dimension of the bottom edge (7012) in a third direction (z) is A mm, and an angle between the side edge (7011) and the bottom edge (7012) is $\beta°$; a maximum dimension of the tab (70) in the first direction (x) is h mm; and the area $S_2$ mm$^2$ of the guide hole (30) on the first surface (101) further satisfies: $S_2 = ((B - 2 - (h^2 + 4)^{0.5}) \times (A - 2B\cot\beta))$.

3. The welding positioning apparatus of claim 2, wherein the electrode assembly (50) comprises at least two groups, the electrode assemblies (50) are arranged at an interval in the second direction (y), so that the tabs (70) are symmetrically arranged along a central axis of the main board (10) in the third direction (z); and a maximum width of the welding positioning apparatus in the second direction (y) is $W_1$ mm, and a maximum distance of the electrode assemblies (50) arranged at an interval in the second direction (y) is $W_2$ mm and satisfies: $0.6 \leq W_1/W_2 \leq 1$.

4. The welding positioning apparatus of claim 3, wherein the maximum width $W_1$ mm satisfies: $W_1 = 2B - 2 ((4 + h^2)^{0.5}) + 2$, and $2B \leq W_1 \leq 2h$.

5. The welding positioning apparatus of claim 4, wherein the welding positioning apparatus satisfies: $100 \leq S_2 \leq 700$.

6. The welding positioning apparatus of claim 4, wherein the welding positioning apparatus satisfies: $700 \leq Si \leq 1650$.

7. The welding positioning apparatus of claim 4, wherein the welding positioning apparatus satisfies: $17 \leq W_1 \leq 48$.

8. The welding positioning apparatus of claim 4, wherein the welding positioning apparatus satisfies: $10 \leq W_2 \leq 48$.

9. The welding positioning apparatus of claim 4, wherein the tab (70) satisfies: $28 \leq A \leq 51$.

10. The welding positioning apparatus of claim 4, wherein the tab (70) satisfies: $18 \leq B \leq 32$.

11. The welding positioning apparatus of claim 4, wherein the tab (70) satisfies: $80 \leq \beta \leq 90$.

12. The welding positioning apparatus of claim 4, wherein the tab (70) satisfies: $10 \leq h \leq 24$.

13. The welding positioning apparatus of claim 1, wherein a surface of the pressing block (20) away from the main board (10) is a second surface (201), the pressing block (20) is provided with a positioning hole (80), the positioning hole (80) communicates with the guide hole (30) and penetrates through the second surface (201), an area of the positioning hole (80) on the second surface (201) is $S_3$ mm$^2$ and satisfies: $0.6 \leq S_2/S_3 \leq 0.85$.

14. The welding positioning apparatus of claim 13, wherein a maximum dimension of the positioning hole (80) in the first direction (x) is H mm, and a thickness of the protective sheet (40) is D mm and satisfies: $D \leq H$.

**15.** The welding positioning apparatus of claim 14, wherein the welding positioning apparatus satisfies: $140 \le S_3 \le 830$.

**16.** The welding positioning apparatus of claim 14, wherein the welding positioning apparatus satisfies: $1 \le H \le 2$.

**17.** The welding positioning apparatus of claim 14, wherein the protective sheet (40) satisfies: $0.1 \le D \le 1$.

**18.** The welding positioning apparatus of claim 14, wherein the guide hole (30) has a first side wall (302) in the first direction (x), and the positioning hole (80) has a second side wall (802) in the first direction (x); the first side wall (302) is provided with a round corner transition section (3021), and the first side wall (302) is connected to the second side wall (802) through the round corner transition section (3021).

**19.** The welding positioning apparatus of claim 1, further comprising:
a protrusion (90) located on the first surface (101) and connected to the main board (10).

**20.** A welding device, comprising the welding positioning apparatus of any of claims 1-19.

FIG. 1

FIG. 2

FIG. 3

FIG. 4

FIG. 5

FIG. 6

FIG. 7

FIG. 8

FIG. 9

FIG. 10

401

FIG. 11

402

FIG. 12

40

D

302

802

H

80

FIG. 13

FIG. 14

## INTERNATIONAL SEARCH REPORT

| | International application No. |
|---|---|
| | **PCT/CN2023/141914** |

**A. CLASSIFICATION OF SUBJECT MATTER**

B23K37/04(2006.01)i

According to International Patent Classification (IPC) or to both national classification and IPC

**B. FIELDS SEARCHED**

Minimum documentation searched (classification system followed by classification symbols)

IPC: B23K

Documentation searched other than minimum documentation to the extent that such documents are included in the fields searched

Electronic data base consulted during the international search (name of data base and, where practicable, search terms used)

CNTXT, CNKI, VEN: 焊接, 定位, 保护片, 电极, 极耳, 板, 压块, 孔, 移动, 面积, welding, position, locating, protection, plate, electrode, pole, lug, press, hole, move, area.

**C. DOCUMENTS CONSIDERED TO BE RELEVANT**

| Category* | Citation of document, with indication, where appropriate, of the relevant passages | Relevant to claim No. |
|---|---|---|
| PX | CN 116460504 A (SUNWODA ELECTRIC VEHICLE BATTERY CO., LTD.) 21 July 2023 (2023-07-21) description, paragraphs 52-93, and figures 1-14 | 1-20 |
| A | CN 113199190 A (WUXI LEAD INTELLIGENT EQUIPMENT CO., LTD.) 03 August 2021 (2021-08-03) description, paragraphs 51-125, and figures 1-15 | 1-20 |
| A | CN 110605516 A (GUANGDONG HONBRO SCIENCE & TECHNOLOGY CO., LTD.) 24 December 2019 (2019-12-24) entire document | 1-20 |
| A | CN 112247437 A (SVOLT ENERGY TECHNOLOGY CO., LTD.) 22 January 2021 (2021-01-22) entire document | 1-20 |
| A | CN 214291370 U (SUNWODA ELECTRIC VEHICLE BATTERY CO., LTD.) 28 September 2021 (2021-09-28) entire document | 1-20 |

☑ Further documents are listed in the continuation of Box C.     ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **26 March 2024** | **05 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/141914** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 4340803 A (RCA CORP.) 20 July 1982 (1982-07-20)<br>entire document | 1-20 |

Form PCT/ISA/210 (second sheet) (July 2022)

## INTERNATIONAL SEARCH REPORT

| International application No. |
| --- |
| **PCT/CN2023/141914** |

| **Box No. I** | **Nucleotide and/or amino acid sequence(s) (Continuation of item 1.c of the first sheet)** |
| --- | --- |

1. With regard to any nucleotide and/or amino acid sequence disclosed in the international application, the international search was carried out on the basis of a sequence listing:

    a. ☐ forming part of the international application as filed.

    b. ☐ furnished subsequent to the international filing date for the purposes of international search (Rule 13*ter*.1(a)),

        ☐ accompanied by a statement to the effect that the sequence listing does not go beyond the disclosure in the international application as filed.

2. ☐ With regard to any nucleotide and/or amino acid sequence disclosed in the international application, this report has been established to the extent that a meaningful search could be carried out without a WIPO Standard ST.26 compliant sequence listing.

3. Additional comments:

Form PCT/ISA/210 (continuation of first sheet) (July 2022)

**INTERNATIONAL SEARCH REPORT**

International application No.

**PCT/CN2023/141914**

| Box No. III | Observations where unity of invention is lacking (Continuation of item 3 of first sheet) |

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

| | International application No. |
|---|---|
| | **PCT/CN2023/141914** |

| Patent document cited in search report | | | Publication date (day/month/year) | Patent family member(s) | Publication date (day/month/year) |
|---|---|---|---|---|---|
| CN | 116460504 | A | 21 July 2023 | None | |
| CN | 113199190 | A | 03 August 2021 | None | |
| CN | 110605516 | A | 24 December 2019 | None | |
| CN | 112247437 | A | 22 January 2021 | None | |
| CN | 214291370 | U | 28 September 2021 | None | |
| US | 4340803 | A | 20 July 1982 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310413045